# EUROPÄISCHE PATENTSCHRIFT

(11) **EP 0 976 616 B1**
(45) Veröffentlichungstag und Bekanntmachung des Hinweises auf die Patenterteilung: **06.11.2002**
(21) Anmeldenummer: 99112674.9
(22) Anmeldetag: 02.07.1999
(51) Int. Cl.: B60R 11/02

(54) **Anordnung eines Bildschirms in einem Fahrzeug**
Monitor arrangement in a vehicle
Dispositif d'affichage dans un véhicule

(30) Priorität: 31.07.1998 DE 19834562
(43) Veröffentlichungstag der Anmeldung: 02.02.2000
(73) Patentinhaber: Bayerische Motoren Werke Aktiengesellschaft, 80788 München (DE)
(72) Erfinder: Allershausen, Eckhardt, 81377 München (DE)

(56) Entgegenhaltungen:
- EP-A- 0 626 292
- PATENT ABSTRACTS OF JAPAN vol. 1997, no. 02, 28. Februar 1997 (1997-02-28) & JP 08 276793 A (SEIKO EPSON CORP), 22. Oktober 1996 (1996-10-22)
- PATENT ABSTRACTS OF JAPAN vol. 018, no. 386 (M-1641), 20. Juli 1994 (1994-07-20) & JP 06 107083 A (SONY CORP), 19. April 1994 (1994-04-19)
- PATENT ABSTRACTS OF JAPAN vol. 015, no. 318 (M-1146), 14. August 1991 (1991-08-14) & JP 03 118251 A (AISIN SEIKI CO LTD), 20. Mai 1991 (1991-05-20)
- PATENT ABSTRACTS OF JAPAN vol. 016, no. 331 (M-1282), 20. Juli 1992 (1992-07-20) & JP 04 095543 A (MAZDA MOTOR CORP), 27. März 1992 (1992-03-27)
- PATENT ABSTRACTS OF JAPAN vol. 017, no. 639 (M-1515), 26. November 1993 (1993-11-26) & JP 05 201289 A (SONY CORP), 10. August 1993 (1993-08-10)

## Beschreibung

Die Erfindung betrifft eine Anordnung eines Bildschirms in einem Fahrzeug gemäß dem Oberbegriff des Anspruchs 1, siehe zum Beispiel die JP-A-01256122.

Es ist bereits bekannt, in einem Innenraum eines Fahrzeuges einen Bildschirm, beispielsweise im Armaturenbrett, fest einzubauen. Eine feste Einbaulage eines Bildschirms hat jedoch den Nachteil, daß die Positionierung des Bildschirms nur für einen einzigen Benutzer optimal eingestellt werden kann.

Aufgabe der Erfindung ist es, eine Anordnung eines Bildschirms in einem Fahrzeug zu schaffen, bei der die Lage des Bildschirms einstellbar ist.

Diese Aufgabe wird durch die Merkmale des Anspruchs 1 gelöst.

Eine schwenkbare Anordnung eines Bildschirms auf einer zwischen zwei Fahrzeugsitzen befindlichen Mittelkonsole hat den Vorteil, daß der Bildschirm in einem in der Mittelkonsole ausgebildeten Stauraum geschützt unterbringbar ist und zum anderen erlaubt der Zwischenraum zwischen den beiden Fahrzeugsitzen eine optimale Einstellung des Sichtwinkels auf den Bildschirm. Die optimale Einstellung des Sichtwinkels wird dadurch erreicht, daß die Neigung des Bildschirms um eine Längsachse möglich ist, die gleichzeitig die Drehachse für ein Belüftungsgitter ist. Ferner kann der Bildschirm an einem um seine Längsachse drehbaren Arm oder Fuß befestigt sein, so daß der Bildschirm nach links oder rechts verdrehbar ist. Zusätzlich ist es bei einer Anordnung eines Bildschirms an einer Mittelkonsole möglich, die Höhe des Bildschirms über einen entsprechend verstellbaren Arm einzustellen. Ein weiterer Vorteil besteht darin, das in der Mittelkonsole ausgebildete Staufach durch ein Schließelement, wie einen Deckel oder ein Rollo oder dergleichen, zu verschließen.

Ausführungsformen der Erfindung werden nachstehend anhand der Zeichnungen beispielshalber beschrieben. Dabei zeigen:
- Figur 1: eine perspektivische Ansicht einer Mittelkonsole an deren zum Fondbereich gewandten Ende ein in Arbeitsstellung befindlicher Bildschirm angeordnet ist,
- Figur 2: eine Querschnittsansicht der in der Figur 1 gezeigten Mittelkonsole, aus der die geschützte Lage des Bildschirms in einem durch einen Deckel verschließbaren oberen Staufach hervorgeht,
- Figur 3: einen Längsschnitt der in den Figuren 1 und 2 gezeigten Mittelkonsole und
- Figur 4: einen Längsschnitt durch eine Mittelkonsole, bei der ein Staufach zur Aufbewahrung des Bildschirms an einem rückseitigen Ende der Mittelkonsole ausgebildet ist.

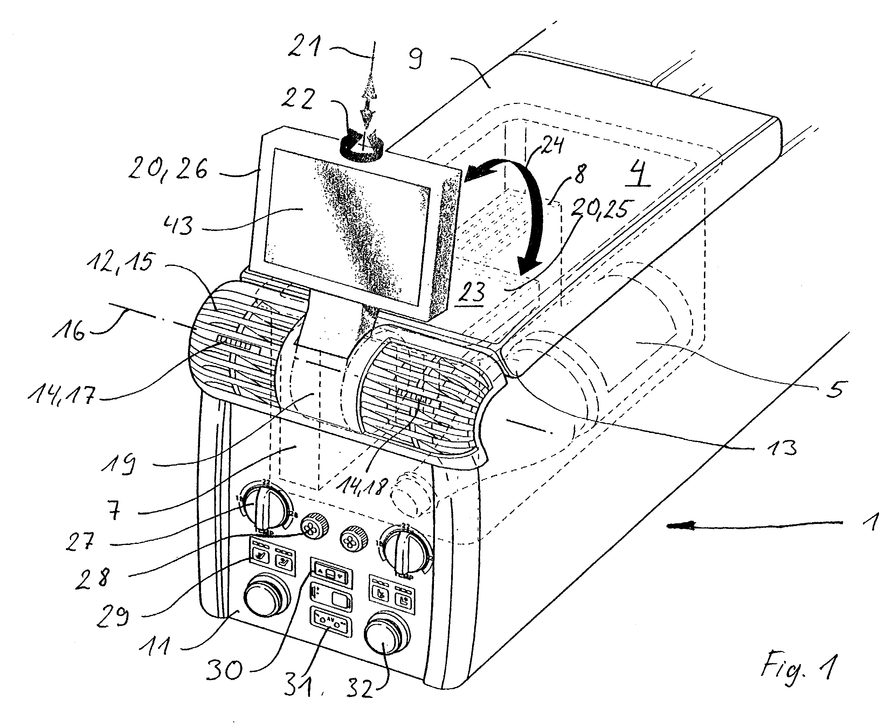

Die Figur 1 zeigt eine Mittelkonsole 1, die beispielsweise zwischen den beiden vorderen Sitzen 2 und 3 eines nicht abgebildeten Personenkraftwagens angeordnet sein kann. Die Mittelkonsole 1 weist ein Staufach 4 zur Ablage von Gegenständen, wie beispielsweise eine Flasche 5, ein Telefongerät 6, ein Laptop oder dergleichen 7 sowie eine CD-Box 8 auf. Das Staufach 4 ist durch einen, beispielsweise zur Seite verschwenkbaren Deckel 9 verschlossen. An einer zu einem Fondbereich 10 gewandten Rückwand 11 der Mittelkonsole 1 ist an einem oberen Bereich 12 der Rückwand 11 im Anschluß an ein hinteres Ende 13 des Deckels 9 ein Belüftungsgitter 14 angeordnet.

Das Belüftungsgitter 14 weist Lamellen 15 auf, die um eine Drehachse 16 um einen vorbestimmten Winkelbereich schwenkbar sind. Damit sich der jeweilige Fondpassagier individuell die Richtung und Menge der aus dem Belüftungsgitter ausströmenden Luft einstellen kann, ist das Belüftungsgitter 14 in einen linken und einen rechten Betätigungsteil 17, 18 aufgeteilt. Zwischen den beiden Betätigungsteilen 17 und 18 ist ein um die Drehachse 16 verschwenkbarer Fuß 19 eines Bildschirms 20 angeordnet.

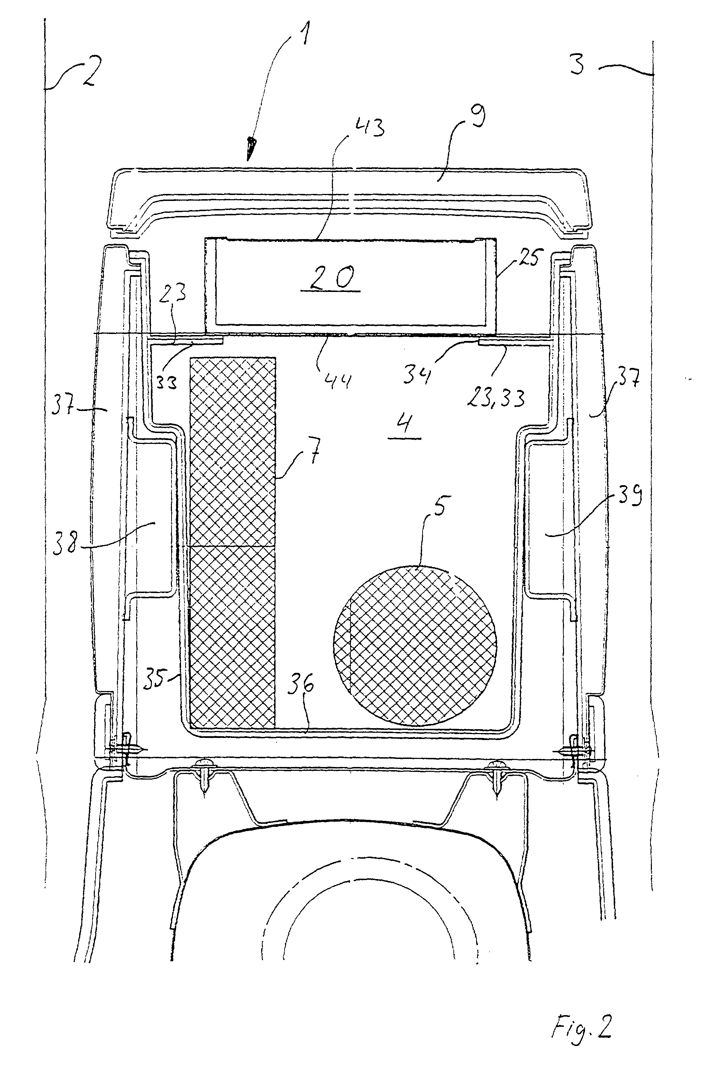

Der Fuß 19 weist einen nicht abgebildeten Mechanismus auf, durch den der Fuß 19 in der eingestellten Winkellage bzw. Neigung des Bildschirms 20 arretierbar ist. In der in der Figur 1 gezeigten Ausführungsform ist der Bildschirm 20 zusätzlich um seine Längsachse 21 um einen vorbestimmten Winkel nach links und rechts schwenkbar, wie dies durch einen Pfeil 22 in der Figur 1 gezeigt ist. Aus der in der Figur 1 gezeigten Arbeitsstellung kann der Bildschirm 20 in ein in der Figur 2 gezeigtes Ablagefach 23 geschwenkt werden, wie dies in der Figur 1 durch den Pfeil 24 dargestellt ist. in der Figur 1 ist in strichlierten Linien die Lage des Bildschirms 20 in der Nichtgebrauchsstellung 25 unterhalb des Deckels 9 angedeutet.

An der Rückwand 11 sind unterhalb des Belüftungsgitters 14 zusätzlich Betätigungselemente zur Einstellung der Temperatur 27 der aus dem Belüftungsgitter 14 ausströmenden Luft, zur Einstellung der ausströmenden Luftmenge 28, zur Betätigung von Sitzheizungen 29 sowie eines Schalters 30 für ein Sonnenrollo vorgesehen. Darüber hinaus befinden sich an der Rückwand 11 ein Anschluß 31 für ein Datenübertragungsgerät, wie beispielsweise ein Video, ein Fax und/oder ein Laptop. Zusätzlich befinden sich an der Rückwand 11 Steckdosen 32 für einen Stromanschluß.

Aus der Figur 2 geht hervor, daß das Ablagefach 23 für den Bildschirm 20 aus zwei seitlichen Anschläge 33 besteht, so daß eine Durchgangsöffnung 34 für das Staufach 4 bleibt. Das Staufach 4 ist in der Regel ein einteiliges, nach oben hin offenes Kunststoffbauteil, mit umlaufenden Wänden 35 und einem Boden 36. Das Staufach 4 ist von Verkleidungswänden 37 umgeben. Zwischen den Seitenwänden 35 des Staufaches 4 und den seitlichen Verkleidungswänden 37 ist auf beiden Seiten jeweils ein Kanal 38, 39 zur Hindurchführung der klimatisierbaren Luft für den Fondbereich 10 ausgebildet.

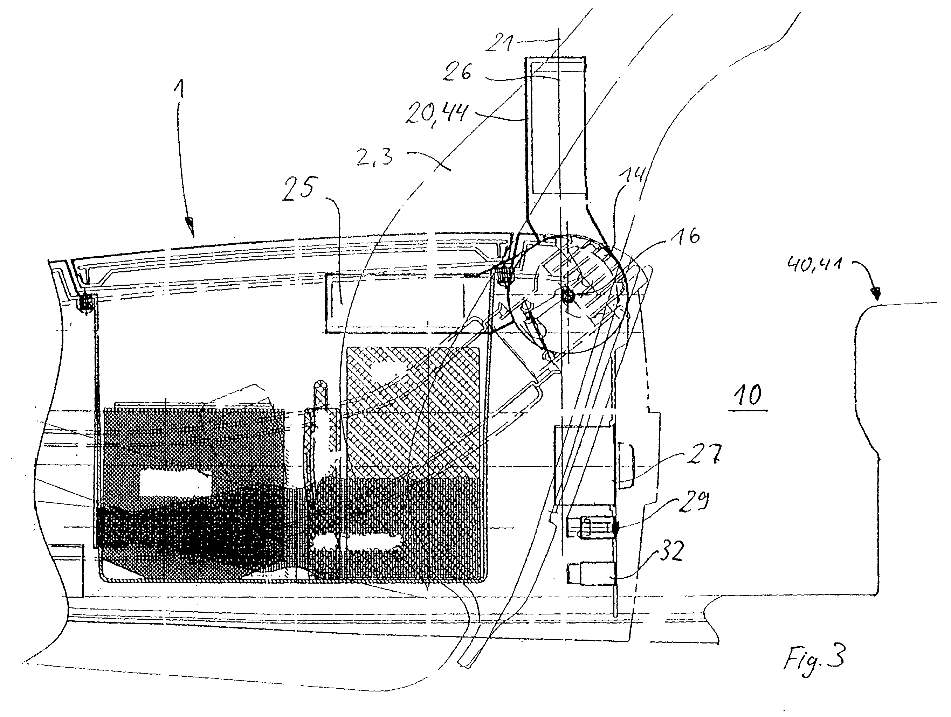

in der Figur 3 sind die beiden Endpositionen 25, 26 des Bildschirms 20 abgebildet. Ferner gehen aus der Figur 3 die Lage eines Sitzes 2, 3 sowie die Platzverhältnisse im Fondbereich 10 in bezug auf eine Sitzfläche 40 einer Rücksitzbank 41 hervor.

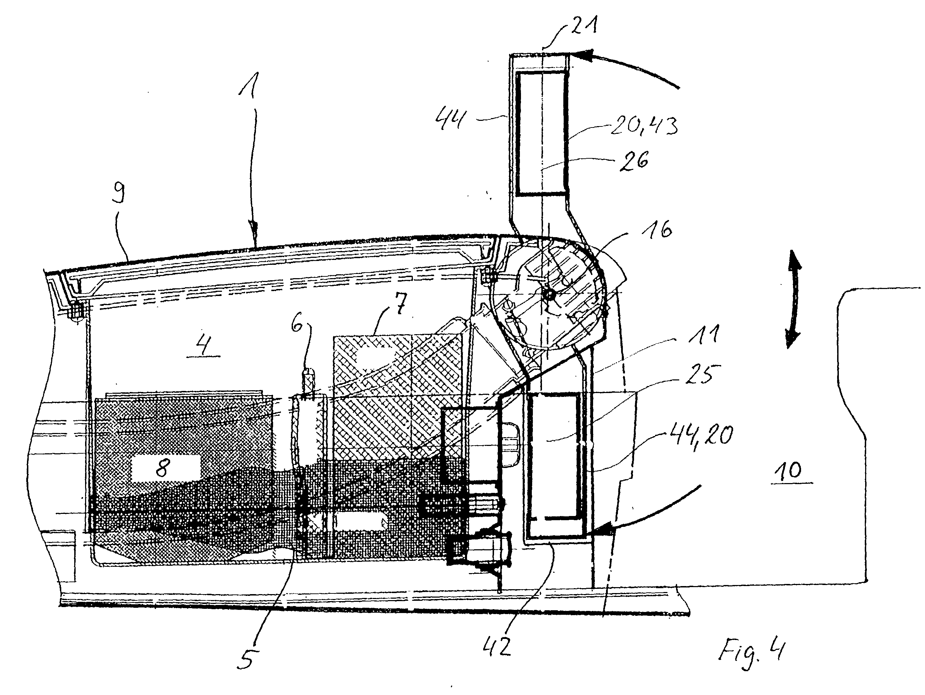

Die Figur 4 zeigt eine Alternative zur Aufbewahrung des Bildschirms 20, bei der in der Rückwand 11 ein Staufach 42 ausgebildet ist. Bei dieser Ausführungsform ist kein separater Deckel erforderlich, da eine Displayseite 43 des Bildschirms 20 der Mittelkonsole 1 zugewandt ist. Eine Rückseite 44 des Bildschirms 20 verschließt das Staufach 42.

## Patentansprüche

1. Anordnung eines Bildschirms (20) in einem Fahrzeug, das zwischen zwei Sitzen eine Mittelkonsole aufweist, wobei die Mittelkonsole ein um eine Drehachse verschwenkbares Belüftungsgitter (14) zur Belüftung oder Klimatisierung eines Fondbereichs des Fahrzeuges aufweist und mit einem in der Mittelkonsole ausgebildeten Stauraum (4, 23; 42), **dadurch gekennzeichnet, daß** ein Fuß (19) eines Bildschirms (20) drehbar um die Drehachse (16) des Belüftungsgitters (14) befestigt ist und daß der Bildschirm (20) über den Fuß (19) aus dem Stauraum (4, 23;42) in eine Arbeitsstellung (26) verschwenkbar ist und daß der Bildschirm (20) in dieser Arbeitsstellung (26) in seiner Lage arretierbar ist.

2. Anordnung nach Anspruch 1, **dadurch gekennzeichnet, daß** der Bildschirm (20) um seine Längsachse (21) drehbar ist.

3. Anordnung nach einem der vorhergehenden Ansprüche 1 oder 2, **dadurch gekennzeichnet, daß** der Bildschirm (20) in Richtung seiner Längsachse (21) höhenverstellbar und arretierbar ist.

4. Anordnung nach einem der vorhergehenden Ansprüche, **dadurch gekennzeichnet, daß** der Bildschirm (20) in einem von oben zugänglichen Stauraum (4) in der Nichtgebrauchsstellung (25) auf einem Anschlag (23) angeordnet ist.

5. Anordnung nach einem der vorhergehenden Ansprüche, **dadurch gekennzeichnet, daß** ein das Stauraum (4) verschließender Deckel (9) den Bildschirm (20) in seiner Nichtgebrauchsstellung (25) arretiert.

6. Anordnung nach einem der Ansprüche 1 bis 3, **dadurch gekennzeichnet, daß** der Bildschirm (20) aus seiner Arbeitsstellung (26) in einen Stauraum (42) in seine Nichtgebrauchsstellung (25) verschwenkbar ist, wobei der Stauraum (42) an einer Rückwand (11) der Mittelkonsole (1) ausgebildet ist.

7. Anordnung nach Anspruch 6, **dadurch gekennzeichnet, daß** eine Vorderseite (43) des Bildschirms (20) in der Nichtgebrauchsstellung (25) einer Wand (42) der Mittelkonsole (1) bzw. des Stauraumes (42) gegenüberliegt.

## Claims

1. An arrangement of a display screen (20) in a motor vehicle comprising a central console between two seats, wherein the central console comprises a ventilation grating (14) pivotable around an axis of rotation for ventilating or air-conditioning a rear region of the vehicle and also comprises a stowage space (4, 23; 42) formed in the central console, **characterised in that** a foot (19) of a display screen (20) is fastened for rotation around the axis of rotation (16) of the ventilating grating (14) and the screen (20) is pivotable via the foot (19) out of the stowage space (4, 23; 42) into an operating position (26), and the display screen (20) is lockable in the said operating position (26).

2. An arrangement according to claim 1, **characterised in that** the screen (20) is rotatable around its longitudinal axis (21).

3. An arrangement according to the preceding claim 1 or 2, **characterised in that** the screen (20) is vertically adjustable and lockable in the direction of its longitudinal axis (21).

4. An arrangement according to any of the preceding claims, **characterised in that** in the inoperative position (25) the screen (20) is disposed on an abutment (23) in a stowage space (4) accessible from above.

5. An arrangement according to any of the preceding claims, **characterised in that** a cover (9) closing the stowage space (4) locks the screen (20) in the inoperative position (25).

6. An arrangement according to any of claims 1 to 3, **characterised in that** the screen (20) is pivotable out of its operating position (26) into an inoperative position (25) in a stowage space (42), the stowage space (42) being formed in a back wall (11) of the central console (1).

7. An arrangement according to claim 6, **characterised in that** in the inoperative position (25) a front (43) of the screen (20) is disposed opposite a wall (42) of the central console (1) or of the stowage space (42).

## Revendications

1. Aménagement d'un écran (20) dans un véhicule automobile comportant, entre deux sièges, une console médiane qui présente pour ventiler ou climatiser une partie arrière du véhicule une grille d'aération (14) pouvant basculer autour d'un axe, ainsi qu'un volume d'accueil (4, 23, 42) à l'intérieur de cette console,
**caractérisé en ce que**
l'écran (20) possède un pied (19) qui est monté basculant sur l'axe de rotation (16) de la grille d'aération (14), cet écran (20) pouvant par basculement par le pied (19) pour sortir du volume d'accueil (4, 23 ; 42) et venir occuper une position de travail (26) dans laquelle il peut être arrêté.

2. Aménagement selon la revendication 1,
**caractérisé en ce que**
l'écran (20) peut tourner autour de son axe longitudinal (21).

3. Aménagement selon l'une quelconque des revendications 1 ou 2,
**caractérisé en ce que**
l'écran (20) peut être réglé et arrêté en hauteur selon son axe longitudinal (21).

4. Aménagement selon l'une quelconque des revendications précédentes,
**caractérisé en ce que**
l'écran (20), quand il est en position de non-utilisation (25), est placé sur une butée (23), dans un volume d'accueil (4) accessible d'en haut.

5. Aménagement selon l'une quelconque des revendications précédentes,
**caractérisé en ce qu'**
un clapet (9) obturant le volume d'accueil (4), arrête l'écran (20) dans sa position de non-utilisation (25).

6. Aménagement selon l'une quelconque des revendications 1 à 3,
**caractérisé en ce que**
l'écran (20) peut, de sa position de travail (26), passer par basculement à sa position de non-utilisation (25) à l'intérieur d'un volume d'accueil (42), prévu sur la paroi arrière (11) de la console médiane (1).

7. Aménagement selon la revendication 6,
**caractérisé en ce que**
la face de lecture (43) de l'écran (20) en position de non-utilisation (25) est en regard d'une paroi (42) de la console médiane (1) ou du volume d'accueil (42).
